# EUROPEAN PATENT APPLICATION

(11) **EP 1 834 909 A2**
(43) Date of publication of application: **19.09.2007**
(21) Application number: 07104084.4
(22) Date of filing: 14.03.2007
(51) Int. Cl.: B65G 65/00, A01D 45/00

(54) **Device and method for collecting raised leek**

(30) Priority: 17.03.2006 BE 200600166
(71) Applicant: Van Bedts, Jan, 2520 Ranst (BE)
(72) Inventor: Van Bedts, Jan, 2520 Ranst (BE)
(74) Representative: D'Halleweyn, Nele Veerle Trees Gertrudis

(57) **Abstract**

Device for collecting leeks and the like and transferring thereof to transport means, such as a conveyor belt, comprising at least one carrier for arranging a stack of leeks thereon, which carrier can be utilized during the harvesting of leeks; transport means;
wherein the device further comprises pushing means which are adapted to push the leeks stacked on a carrier to the transport means for further processing of the harvested leeks.

## Description

The present invention relates to a device and method for collecting harvested leeks or any other substantially uniform product on a carrier, generally referred to as leek container, and transferring thereof to transport means as according to respectively the preamble of claim 1 and of claim 11.

Harvesting machines for automatically harvesting leeks are known. The leeks are herein collected in a leek container, which typically has the form of a carrier (loading floor) with front and rear wall between which the leeks can be placed substantially parallel to this front and rear wall so as to form a stack of leeks placed substantially parallel to each other. This carrier is then removed from the harvesting machine and transferred to a conveyor belt for further processing, i.e. preparing the leeks for sale. According to a known method the leeks are removed manually from the leek container and placed on the conveyor belt. This is a time-consuming and labour-intensive method step.

The invention has for its object to propose a device and method for collecting and transferring harvested leeks to transport means which allow further automation, and in particular allow a more rapid transfer from a leek container to the transport means.

The device according to the invention is distinguished for this purpose in that it further comprises pushing means which are adapted to push the leeks stacked on a carrier to the transport means. Such pushing means allow a rapid transfer of the leeks to the transport means, wherein the stack placed on the carrier can typically be transferred from the carrier to the transport means in a single operation.

The method according to the invention is distinguished in that a carrier with leeks stacked thereon is brought in front of the pushing means, whereafter the stack of leeks is pushed by the pushing means onto transport means, such as a conveyor belt, placed behind the carrier. Transfer can thus take place automatically using this method.

According to the preferred embodiment, the carrier can be connected to a harvesting machine and the carrier has a substantially flat bottom and a number of upright supports, typically a front and rear wall. This ensures that the carriers are stackable, wherein a carrier at a higher position can rest on the upper end of the supports, i.e. typically on the front and rear walls, of the carrier located thereunder. In this way a number of filled carriers stacked one above another can be readily transported together, and each carrier of the stack of carriers can be placed one by one in front of the pushing means, wherein a stack of leeks arranged thereon is pushed each time onto a conveyor belt. This ability to stack the carriers is particularly useful because the stacking height of leeks is limited. This is because, if the leeks are stacked too high, the upper leeks come to lie obliquely, whereby they may slide off the stack.

According to a further development embodiment, the harvesting machine comprises a wall for the purpose of forming an upright longitudinal wall for a carrier mounted on the harvesting machine. This facilitates stacking of the leeks during harvesting, wherein one outer end of the leek supports against this longitudinal wall.

According to the preferred embodiment, the pushing means comprise a pushing surface which is oriented substantially perpendicularly of the carrier and which is movable substantially parallel to the carrier in order to push the leeks stacked thereon onto the transport means. Even more preferably the pushing means take the form of an ejector with a push rod at the end of which a pusher body, such as a pusher plate, is provided. The push rod can herein be coupled to drive means for moving the push rod substantially parallel to the carrier such that the pusher body pushes a stack of leeks arranged on this carrier in the direction of the transport means. It is self-evident that the dimensions of the pushing surface must be adapted to those of the stack of leeks to be pushed. Typically, the dimensions of the pushing surface will substantially correspond to those of the cross-section of a stack of leeks placed on a carrier. The pushing surface is typically mounted here such that the lower edge of this pushing surface is located a small distance from the carrier.

In the case of a carrier with front and rear walls between which the leeks are arranged substantially parallel to these walls, the pushing surface preferably extends to a position practically against these front and rear walls.

The drive means of the pushing means can for instance make use of compressed air. The skilled person will however appreciate that there are numerous other possibilities (hydraulic, electrical and so forth).

According to a further developed embodiment of the invention, the device comprises vertical displacing means which are adapted to bring a carrier to the same height as the pushing means and the transport means such that the pushing means can transfer the leeks stacked on this carrier to the transport means.

In the simplest embodiment the vertical displacing means comprise a lift system for the carriers. It is however also possible to envisage the pushing means and the transport means being vertically displaceable relative to a fixed carrier or fixed stack of carriers. It is of course also possible to provide a number of pushing means one above another which can co-act with a number of carriers stacked one above another and a corresponding number of transport means arranged one above another.

The invention will be further elucidated on the basis of a purely illustrative and non-limitative exemplary embodiment and with reference to the accompanying drawing, in which:
figure 1 shows a perspective view of an exemplary embodiment of a device according to the invention;
figure 2 is a front view of the exemplary embodiment of figure 1; and
figure 3 is a side view of the exemplary embodiment of figure 1.

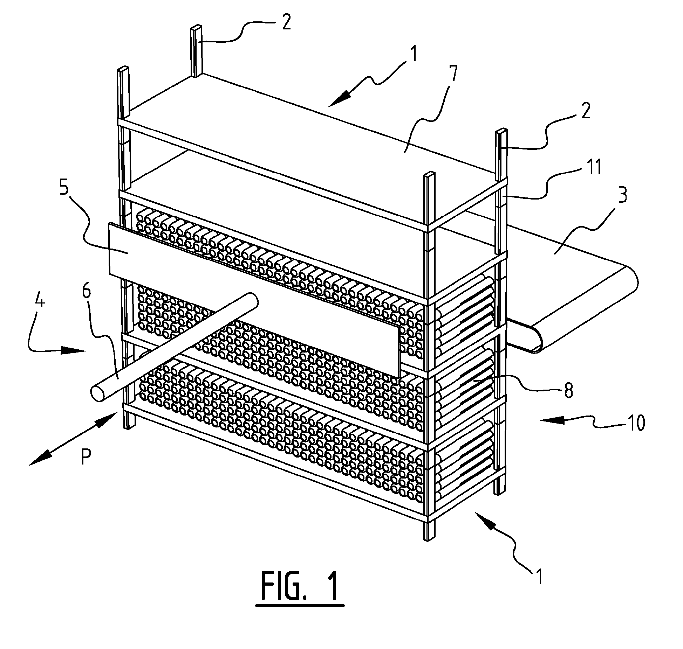

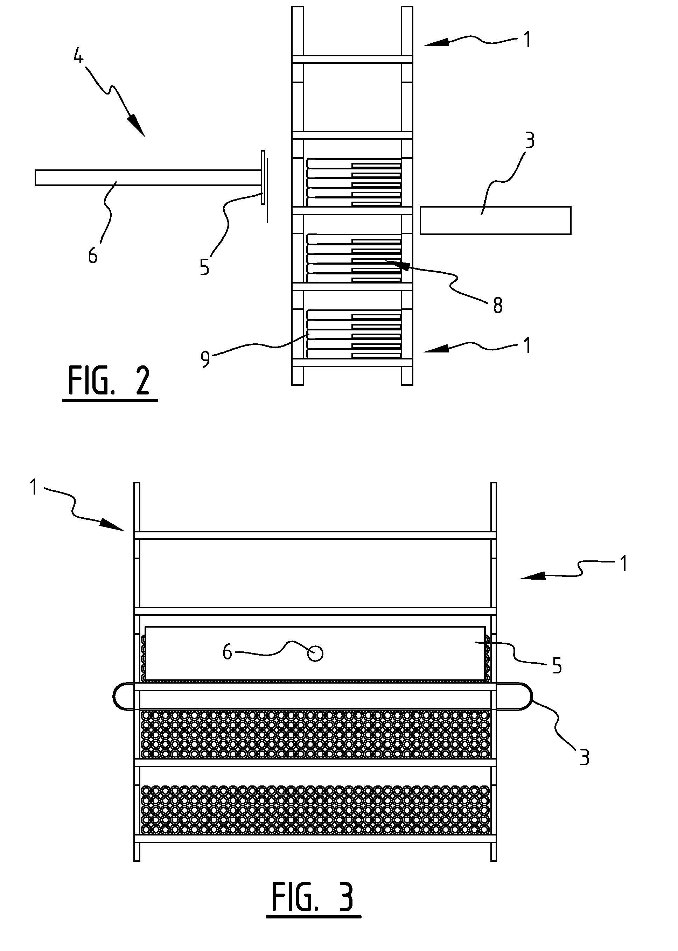

The exemplary embodiment shown in figures 1-3 comprises a number of carriers 1 which are stacked one above another in order to form a stack of carriers 10, wherein a stack of leeks 8 of a limited height can be placed on each carrier. Leeks are typically stacked such that all leeks lie substantially parallel to each other and that the roots 9 of the leeks are all directed to the same side.

Carrier 1 consists here of a substantially rectangular flat bottom 7 under which four legs 11 are arranged in the four corners and on which four supports 2 are provided in the four corners. In this manner a stackable carrier 1 is obtained. Note that it is usual in practice to provide a front and rear wall (not shown) on the short sides of the bottom 7, these front and rear walls extending between supports 2.

The shown exemplary embodiment further comprises pushing means which take the form of an ejector 4 with a push rod 6 and a pusher plate 5. These pushing means are horizontally movable in the direction of arrow P so as to push off carrier 1 a stack of leeks arranged on the carrier. The stack of carriers is placed between pushing means 4 and a conveyor belt 3 and is vertically movable by means of a lift system (not shown). The carriers can hereby be brought successively into line with pushing means 4 and conveyor belt 3.

Means can further be provided to remove the empty carriers 1, also referred to as leek containers, from the stack and means for adding filled leek containers to the stack.

Although the invention has been described for the purpose of collecting and transferring leeks, the skilled person will appreciate that the invention is also suitable for any other stackable vegetable material of elongate form, such as celery, spring onions, saplings, cuttings of plants or trees and so on.

The present invention is not limited to the above described exemplary embodiments, and the skilled person will understand that many modifications and variants can be envisaged without departing from the scope of the invention. The scope of the invention is defined solely by the following claims.

## Claims

1. Device for collecting leeks and the like and transferring thereof to transport means, such as a conveyor belt, comprising:
- at least one carrier (1) for arranging a stack of leeks (8) thereon, which carrier can be utilized during the harvesting of leeks;
- transport means (3);
**characterized in that** the device further comprises pushing means (4) which are adapted to push the leeks stacked on a carrier to the transport means (3) for further processing of the harvested leeks.

2. Device as claimed in claim 1, **characterized in that** the carrier can be connected to a harvesting machine.

3. Device as claimed in claim 1 or 2, **characterized in that** the pushing means comprise a pushing surface (5) which is oriented substantially perpendicularly of the carrier and which is movable substantially parallel to the carrier in order to push the leeks (8) stacked thereon onto the transport means (3).

4. Device as claimed in any of the foregoing claims, **characterized in that** the pushing means take the form of an ejector with a push rod (6) at the end of which a pusher body, such as a pusher plate (5), is provided, which push rod can be coupled to drive means for moving the push rod substantially parallel to the carrier such that the body pushes a stack of leeks arranged on this carrier in the direction of the transport means.

5. Device as claimed in claim 4, further comprising drive means for the pushing means which make use of compressed air.

6. Device as claimed in any of the foregoing claims, **characterized in that** the device further comprises vertical displacing means which are adapted to bring the pushing means, a carrier with a stack of leeks and the transport means to substantially the same height such that the pushing means can transfer the leeks stacked on this carrier to the transport means.

7. Device as claimed in claim 6, **characterized in that** the vertical displacing means comprise a lift system for the carriers.

8. Device as claimed in any of the foregoing claims, comprising a harvesting machine which is provided with a wall for the purpose of forming an upright longitudinal wall for a carrier mounted on the harvesting machine.

9. Device as claimed in any of the foregoing claims, **characterized in that** the carrier has a substantially flat bottom and is provided on its periphery with a number of upright supports in order to make the carriers stackable, wherein a carrier at a higher position can rest on the upper end of the supports of the carrier located thereunder.

10. Device as claimed in any of the foregoing claims, **characterized in that** the carrier has a rectangular bottom and upright, mutually opposite front and rear walls, wherein the pushing means are adapted to push the stack of leeks out of the carrier parallel to the front and rear wall.

11. Method for collecting harvested leeks and transferring thereof to transport means, wherein:
- the leeks are harvested and arranged on a carrier until a desired stack is obtained;
**characterized in that**:
- the carrier with leeks stacked thereon is brought in front of pushing means;
- the stack of leeks is pushed by the pushing means onto transport means, such as a conveyor belt, placed behind the carrier.

12. Method as claimed in claim 11, **characterized in that** the leeks are arranged on the carrier in a number of layers of substantially parallel leeks.

13. Method as claimed in claim 12, **characterized in that** the leeks are directed with the root side toward the pushing means.

14. Method as claimed in claim 11, 12 or 13, **characterized in that** the harvested leeks are arranged on a number of stackable carriers, whereafter these carriers are stacked onto each other.

15. Method as claimed in claim 14, **characterized in that** the pushing means push the stacks of leeks one by one from the carriers stacked one above another onto transport means.

16. Method as claimed in claim 14 or 15, **characterized in that** each carrier of the carriers stacked one above another is positioned successively in front of the pushing means using a lift system.

17. Use of a leek container with only a front and rear wall as carrier in a device as claimed in any of the claims 1-10, or as carrier in the method according to any of the claims 11-16.
